(19)

Europäisches
Patentamt
European
Patent Office
Office européen
des brevets

(11)　**EP 1 977 887 A1**

(12)　**EUROPEAN PATENT APPLICATION**

(43) Date of publication:
**08.10.2008 Bulletin 2008/41**

(51) Int Cl.:
*B32B 17/10* (2006.01)　　*C03C 27/12* (2006.01)
*C08K 3/36* (2006.01)　　*C08L 29/14* (2006.01)

(21) Application number: **07105695.6**

(22) Date of filing: **05.04.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicants:
- **Kuraray Europe GmbH
  65926 Frankfurt am Main (DE)**
- **Kuraray Co., Ltd.
  Kurashiki-shi, Okayama 710-8622 (JP)**

(72) Inventors:
- **Wakui, Takashi
  Kurashiki-shi 710-8691 (JP)**

- **Moriguchi, Nobuhiro
  Kurashiki-shi Okayama 710-8691 (JP)**
- **Keller, Uwe
  53177, Bonn (DE)**
- **Steuer, Martin
  65835, Liederbach (DE)**

(74) Representative: **Kisters, Michael Marcus
  Kuraray Europe GmbH
  Patents and Trademarks
  Mülheimer Strasse 26
  53840 Troisdorf (DE)**

(54)　**Interlayer films for laminated glazing with improved mechanical properties**

(57)　The present invention relates to interlayer film useful for laminated glass comprising polyvinyl acetal (A), at least one plasticizer (B), fumed silica (C) and at least one basic compound (D), wherein the interlayer film has at a thickness of 0,76 mm a haze value of 0,01 to 5,0 % according to ASTM 1003 and the weight ratio of C/(A+B) is 2,5/100 to 60/100.

EP 1 977 887 A1

**Description**

**Technical Field**

Interlayer films for laminated glazing are long known in the art and mostly produced from plasticized polyvinyl butyral by an extrusion process. Nearly all windshields for cars or airplanes are produced from laminated glazing; in addition laminated glazing is often used as safety glazing for architectural applications.

To control the adhesion of the interlayer film in laminated glazing, a lot of research has been done. Besides the use of special plasticizer or adhesion control agents, the addition of filler materials such as inorganic compounds, especially silica has been proposed.

**Prior Art**

US 2,467,342 describes the addition of colloidal silica in polyvinyl acetal resins to cast films. The colloidal silica disclosed in this publication must be in sol form in order to produce a clear film without haze. Casting processes are not applicable for the industrial production of polyvinyl acetal films.

EP 0 227 633 discloses the use of silica as nucleating agent in interlayer films for fire resistant laminated glazing. This interlayer film comprises a plasticizer, an organic phosphate as char-forming component and silica as nucleating agent. In order to prevent undesirable haze of the interlayer film due to the addition of silica, only silica having a refractive index within + 0,03 of the plasticized formulation can be used.

The refractive index of the plasticized formulation depends largely on the plasticizer composition, which includes organic phosphates. Therefore only certain combinations of silica and plasticizer mixtures are usable and disclosed in this publication. Organic phosphates are no longer used as plasticizer due to environmental concerns. Fumed silica like the disclosed Cab-O-Sil M5 show refractive indices $n_D$ of 1.460, whereas PVB-films using the common non-aromatic plasticizer in standard amounts show refractive indices $n_D$ close to 1.482 at 20 °C. The addition of large amounts of silica according to EP 0227633 would lead to an unacceptable haze value due to the difference in refractive indices.

EP 1 042 121 discloses the use of small amounts of fumed silica in polyvinyl butyral films to enhance the adhesion between interlayer film and glass. In order to maintain the haze of the interlayer film in an acceptable range, only 0,001 to 0,25 % by weight of silica is added to the plasticized polyvinyl butyral. By adding such small amounts of silica, no effect on the mechanical properties such as the tensile strength of the interlayer film can be detected.

JP 11-060290 discloses the addition of silica and other metal oxides to polyvinyl acetal in combination with the metal salt of a carboxylic acid with 5 to 25 carbon atoms. In this publication, an upper limit of 0,5 % by weight of silica is proposed in order to increase the adhesion of an interlayer film to glass and at the same time maintain an acceptable haze value. If used in the disclosed amounts, silica has practically no effect on the mechanical properties of the interlayer film.

Most of the published literature addresses the problem that by adding silica to plasticized polyvinyl acetals, the resulting interlayer films will obtain an unacceptable haze value for optical applications. Whether this unwanted haze value is due to the silica particles themselves or due to higher moisture sensitivity remains unclear.

So far, only small amounts of silica have been used to increase the adhesion between glass and interlayer film if at the same time an opaque appearance of the interlayer film has to be avoided. Furthermore, if silica is used in higher amounts than those described by the above-mentioned publications, not only unacceptable haze values but also discoloration of the film may result due to the acid properties of the silica. Acidic conditions will lead to partial degradation of the acid sensitive PVB-polymer at the high temperatures used for PVB-film extrusion.

It was an object of the invention to improve the mechanical properties such as the tensile strength of an interlayer film based on polyvinyl acetal by adding silica without causing an unacceptable haze value.

Surprisingly and against the teaching of the prior art, it was found that high amounts of silica can be added to interlayer films at low haze, thereby enhancing the mechanical properties of the interlayer film.

**Disclosure of the invention**

The object of the invention is accomplished by providing an interlayer film useful for laminated glass comprising polyvinyl acetal (A), at least one plasticizer (B), fumed silica (C) and at least one basic compound (D), wherein the interlayer film has at a thickness of 0,76 mm a haze value of 0,01 to 5.0 % according to ASTM 1003 and the weight ratio of C/(A+B) is 2,5/100 to 60/100.

Although having low haze, the mechanical properties of the interlayer film according to the invention are enhanced compared with an interlayer film of identical composition, but without silica. In terms of "tensile stress at 100% of elongation" and/or "tensile stress at 50% of elongation", the stress of an interlayer film according to the invention can be at least 1,2 times, preferably 1,2 to 30,0 times, more preferably 1,2 to 20,0 times and most preferably 1,2 to 10,0 times of that of an interlayer film with the same composition without fumed silica (C).

The polyvinyl acetal (A) used in the present invention is produced by reacting polyvinyl alcohol with at least one aldehyde. Preferred aldehydes for this reaction are formaldehyde, acetaldehyde, propionaldehyde and butyraldehyde.

Most preferable, polyvinyl butyral (PVB) is used as polyvinyl acetal. Polyvinyl butyral is a terpolymer with acetate, hydroxyl and acetal units. Preferably, the polyvinyl butyral used in the present invention comprises 0 to 2 % by weight acetate units, 15 to 25 % by weight hydroxyl units and 85 to 76 % by weight butyral units.

Furthermore, partly cross-linked PVB, obtainable by reaction of polyvinyl alcohol with a mixture of at least one aldehyde and at least one dialdehyde and/or aldehyde containing carboxylic groups according DE 10 143 109 or WO 02/40578 A1, can be used.

As basic compound (D), metal salts of organic carboxylic acids comprising 1 to 15 carbon atoms are preferred. Especially useful are alkali or earth alkali salts of acetic acid like sodium acetate, magnesium acetate or potassium acetate. It is also possible to add inorganic compounds like sodium hydroxide or potassium hydroxide, but since excess amounts of such strong bases may lead to chemical degradation of the polyvinyl acetal or the plasticizer, the use of inorganic compounds is less preferred. The basic compound (D) is usually employed in an amount of 0,005 to 2 % by weight, preferably 0,05 to 1 % by weight, calculated on the mixture (A+B).

Commercially available PVB-resin for PVB-film production is often stabilized against acidic degradation with small amounts of a base such as sodium or potassium hydroxide. Extruded PVB-film from such resin has therefore a certain alkalinity, measurable as alkaline titer. The addition of fumed silica will neutralize a certain amount of the base contained in the resin which may result in alkaline titers below 3 or even acid titer.

By the usual titration method however, acid titer will result in a measured alkaline titer of "0", since negative values are not included in the range of the alkaline titer method. To prevent unwanted coloration of the film, interlayer films according to the invention show preferable alkaline titer of more than 3, especially more than 10 and preferable more than 20 or 30. The upper limit of the alkaline titer value is not of particular importance, but should not exceed 100.

Fumed silica (C) can be used in an amount of 2.5 to 60, preferably 10 to 40, more preferably 10 to 25 and most preferably 7.5 to 15 parts per 100 parts per weight of the mixture (A+B). The fumed silica may further be doped by one or more compounds selected from the group consisting of $Al_2O_3$, $TiO_2$, $ZrO_2$ and MgO and can comprise 0,1 to 20 % by weight (calculated on the silica) of at least one of these metal oxides. Such compounds are commercially available from Degussa GmbH, Germany.

The silica used in the present invention can further be characterized by its surface properties and the particle size. The preferred fumed silica used in the present intention has BET-surface areas of not less than 50 $m^2/g$, especially 50 to 300 $m^2/g$ and/or an average size of the primary particles of not more than 50 nm, especially 10 to 50 nm.

The haze value of the plasticized film according to the invention is in the range of that of commercial available interlayer film. Interlayer films according to the invention show haze value of 0,01 to 5,0 %, preferably 0,01 to 3,0 %, more preferably 0,01 to 2,0% and most preferably 0,01 to 1,0 %. These values were measured according to ASTM D 1003 or JIS K7105 at an interlayer film having a thickness of 0,76 mm. If the interlayer film is thinner or thicker, haze values have to be calculated to match a thickness of film of 0,76 mm.

In addition to the mentioned haze values, interlayer films according to the invention show preferable Yellowness delta b Index of 5 or less (0 to 5), preferably 0,01 to 3, more preferably 0,01 to 1 and most preferably 0,01 to 0,5. The Yellowness delta b Index is measured as described in the examples at an interlayer film having a thickness of 0,76 mm. If the interlayer film is thinner or thicker, the Yellowness delta b Index has to be calculated to match a thickness of film of 0,76 mm.

The interlayer film of the present invention may comprise 20 to 100 parts, preferably 30 to 80 parts plasticizer (B) per 100 parts polyvinyl acetal. Any plasticizer generally used for the production of interlayer films from polyvinyl acetales can be employed in the present invention. Especially useful are triethylenglycol-di-2-ethylbutyrate (3GH), triethylenglycol-heptanoate (3G7) or triethylenglycol-di-2-ethylhexanoate (3G8) as well as the corresponding tetra ethylene glycol and oligoethylene glycol derivatives and esters with carboxylic acids containing 8 to 12 carbon atoms. Furthermore, dihexyladipate (DHA), dioctyladipate (DOP), dibutylsebacate (DBS) and dialkylphtalates can be used. All plasticizers can be used alone or in any mixture thereof.

The use of plasticizer mixtures of a "standard" plasticizer like the above-mentioned compounds and a co-plasticizer is also possible. Such mixtures are disclosed in DE 102004043907 A1 and comprise at least one of the above-mentioned "Standard" plasticizers and 1 to 99 % by weight, preferably 1 to 50 % by weight, more preferably 1 to 10 % by weight (calculated on the plasticizer mixture) of at least one co-plasticizer having the chemical formula I or II

$$R1-O(-R2-O)_n-CO-R5 \qquad I$$

$$R1-O(-R2-O)_n-CO-R3-CO-(O-R4-)_m-O-R6 \qquad II$$

With R1, R5, R6: independently H, aliphatic or aromatic residue with 1 to 12 carbon atoms,

R3: direct bond, bivalent aliphatic or aromatic residue with 1 to 12 carbon atoms,

R2, R4: independently H, aliphatic or aromatic residue with 1 to 12 carbon atoms,

n, m: independently integer of 1 to 10, preferably 1 to 5.

R2 and R4 can represent units of ethylene, propylene or butylene groups, i.e. the compound may contain groups derived from ethylene oxide, propylene oxide or butylene oxide and/or oligomers thereof.

R1, R5 und R6 are preferably methyl-, ethyl-, propyl-, butyl- or hexyl groups.

The carboxylic acids of the ester according formula I are in general carboxylic acids comprising 1 to 18 carbon atoms, especially benzoic acid, cyclohexanecarboxylic acid, acetic acid or propionic acid. As carboxylic acids of the ester according to formula II the following dicarboxylic acids are preferred: oxalic acid, malonic acid, glutaric acid, succinic acid, adipic acid, pimelin acid, azelaic acid, sebacic acid, terephthalic acid, phthalic acid, isophthalic acid and all stereo isomers of cyclohexandicarboxylic acid.

Namely, di-(2-butoxyethyl)-adipate (DBEA), Di-(2-butoxyethyl)-sebacate (DBES), di-(2-butoxyethyl)-acelate, di-(2-butoxyethyl)-glutarate, di-(2-butoxyethoxyethyl)-adipate (DBEEA), di-(2-butoxyethoxyethyl)-sebacate (DBEES), di-(2-butoxyethoxyethyl)-acelate, di-(2-butoxyethoxyethyl)-glutarate, di-(2-hexoxyethyl)-adipate, di-(2-hexoxyethyl)-sebacate, di-(2-hexoxyethyl)-acelate, di-(2-hexoxyethyl)-glutarate, di-(2-hexoxyethoxyethyl)-adipate, di-(2-hexoxyethoxyethyl)-sebacate, di-(2-hexoxyethoxyethyl)-acelate, di-(2-hexoxyethoxyethyl)-glutarate, di-(2-butoxyethyl)-phthalate and/or di-(2-butoxyethoxyethyl)-phthalate can be used as co-plasticizer.

It is also possible to use the plasticizer according formula I or II as single plasticizer in pure form (100%) without any additional plasticizer.

The compositions for interlayer films according to the present invention can further contain the usual additives known to the skilled person, such as small amounts of water, UV-absorbing compounds (for example benzotriazoles such as Tinuvin 328, 326, P, 327), antioxidant such as phenolic, adhesion control agents (ACA), optical brightener, stabilizer such as HALS, dyes and/or pigments.

The mechanical properties of interlayer films based on polyvinyl acetal vary with temperature and are usually adjusted by choice of the chemical composition and the amount of the resin and plasticizer to cope with the usual environmental conditions. The glass transition temperature Tg of the interlayer film is therefore of particular importance.

The difference between the glass transition temperature of the interlayer film according to the invention, Tga, and the glass transition temperature of an interlayer film with the same composition, but without fumed silica (C), Tgb, should be within 3 degrees Celsius. ($|Tga-Tgb| <= 3$)

Especially preferred are interlayer films for laminated glass wherein:

(a) the tensile stress at 50% and/or 100% of elongation of said interlayer film is at least 1.20 times of an interlayer film without fumed silica (C) and

(b) the difference between the glass transition temperature of said interlayer film, Tga, and the glass transition temperature of an interlayer film with the same composition, but without fumed silica (C), Tgb, is within 3 degrees Celsius. ($|Tga-Tgb| <= 3$).

The interlayer film according to the invention can be produced by feeding the fumed silica and the polyvinyl acetal simultaneously and the plasticizer charged with additives and the basic compound separately to an extruder to form a plasticized melt that is extruded from a slit die. It is also possible to first mix the polymer and the plasticizer and add silica and the basic compound to this mixture. The addition of the fumed silica to a molten mixture containing the basic compound by means of a side feeder attached to the extruder is also possible. The extrusion process itself is well known in the art and disclosed for example in EP 0 185 863 B1, WO 03/097347 A1 or WO 01/43963 A1.

The silica used in the interlayer films according to the invention influences the adhesion between the interlayer film and glass surface. The adhesion of interlayer films is - regardless of the application - carefully adjusted to a compromise of penetration resistance and bonding to the glass panes. The influence of silica can be levelled by adjusting the amount of adhesion control agents. As adhesion control agents, the same compounds as the basic compounds (D) may be used, i.e. alkali and/or earth alkali metal salts of organic carboxylic acids comprising 1 to 15 carbon atoms are preferred. Especially useful are sodium acetate, magnesium acetate or potassium acetate. Adhesion control agents may be used in 0.0001 to 0.01 weight-%, based on the total mixture.

A different approach of adjusting the adhesion of interlayer film to glass would be to avoid the contact between silica-containing films and glass on at least one side of the film.

Another object of the invention are multilayer films consisting of at least one layer or film comprising polyvinyl acetal (A') and at least one plasticizer (B') and at least one layer or film comprising polyvinyl acetal (A), at least one plasticizer (B), fumed silica (C) and at least one basic compound (D), wherein the multilayer film has at a thickness of 0,76 mm a haze value of 0,01 to 5,0 % according to ASTM 1003 and the weight ratio of C/(A+B) is 2,5/100 to 60/100.

All features already discussed for silica-containing film as monolayer could apply to the silica-containing layer or film in the multilayer film.

The polyvinyl acetal (A') and (A) and the plasticizer (B') and (B) may be the same or different in regard of amount used or chemical composition. Preferred is the use of the same materials in an identical amount.

The layer or film comprising polyvinyl acetal (A') and at least one plasticizer (B') may contain the usual additives known to the skilled person, such as small amounts of water, UV-absorbing compounds (for example benzotriazoles such as Tinuvin 328, 326, P, 327), antioxidant such as phenolic, adhesion control agents (ACA), optical brightener, stabilizer such as HALS, dyes and/or pigments.

The multilayer film may consist of one layer or film containing silica and one layer or film without silica. In another embodiment of the invention, at least one (preferred: one) silica-containing layer or film is sandwiched between at least two (preferred: two) layers or films without silica. The surface of such multilayer film has the properties of a "standard" monolayer film without silica, but the mechanical properties such as tensile strength of the overall multilayer film are improved by the silica-containing layer or film.

The silica-containing core layer or film of the multilayer film can be produced as already described. The multilayer film according to this invention can be produced by mechanical combination of the films, but may also be produced by coextrusion of the layers.

The multilayer film may have a thickness of multiples of 0,38 mm as usual in production of laminated glazing. Therefore the layer or film containing silica can be as thin as 0.1 mm and as thick as needed to achieve the desired mechanical properties.

The interlayer and multilayer films according to the invention can be used for the production of laminated glazing, especially in windshields of cars, busses and aircrafts, for buildings and in sound-absorbing walls.

## Examples

### 1) Measurements

*Alkaline titer*

3 - 4 g of PVB-film is dissolved in 100 ml mixture of ethyl alcohol/THF (80:20) on a magnetic stirrer over night. 10 ml of diluted hydrochloric acid (c = 0,01 mol/l) are added. Excess hydrochloric acid is potentiometricaly titrated with a solution of tetrabutylammonium hydroxide in 2-propanol (TBAH, c = 0,01 mol/l) using a titroprocessor (e.g. by Metrohm) against a blank sample. Alkaline titer is calculated as:

$$\text{ml } (0,01 \text{ mol/l HCl}) \text{ per } 100\text{g of sample} = (\text{ml TBAH}_{\text{blank}} - \text{ml TBAH}_{\text{sample}}) \times 100 \, / \, \text{sample weight in g.}$$

*Tensile properties* were determined according to DIN EN ISO 527-1 and DIN EN ISO 527-3, on strip specimens of the dimension 15 mm x 120 mm using an increased elongation rate of 200 mm/min.

*Yellowness delta b Index* of the film was determined measuring a laminate of the film between two plies of 2 mm standard float glass against a reference glass pair on an optical photometer Hunterlab "Colorquest XE" in the L,a, b-system: b value (laminate) - b value (glass pair) = delta b.

*Haze* of the film was measured according to ASTM 1003 at 20°C on a Hunterlab "Colorquest XE" in laminated form i.e. laminated between two plies of 2 mm clear float glass without haze.

*Glass transition temperature Tg*

Glass transition temperature is understood as the maximum of the loss factor (tan $\delta$) curve as measured by dynamic mechanical thermal analysis (DMTA) on a film sample at 1Hz with an amplitude of 0,05% and at a heating rate of 2K/min.

### 2a) Preparation of interlayer film (monolayer)

PVB-films of the examples according to the invention and the comparative examples were prepared under identical conditions by an extrusion process with a melt temperature close to 200 °C, forcing the molten mixture through a slit die. PVB polymer and optionally fumed silica were simultaneously fed into the hopper, whereas the plasticizer containing UV-absorber in dissolved form is added as a separate liquid component. The basic compound was fed into the extruder via a separate inlet as an aqueous solution. Film thickness was 0,76 mm in all examples/comparative examples.

## 2b) Preparation of interlayer film (multilayer)

Multilayer films were prepared by sandwiching one (core) layer according to example W10 with a thickness of 0.38 mm between two layers according to comparative example C9 with a thickness of 0.20 mm. The resulting multilayer film had a thickness of 0.78 mm and was tested for its optical and mechanical properties in the same way as the monolayer films.

## 3) Materials

Silica: Commercial grade AEROSIL® 130 of DEGUSSA is used for preparation of the fumed silica-containing film. Commercial grade AEROSIL® 200 of DEGUSSA, commercial grade AEROSIL® 300 of DEGUSSA, commercial grade CAB-O-SIL® M5 of CABOT and commercial grade CAB-O-SIL® LM150 of CABOT are also used for preparation of the fumed silica-containing film. Commercial grade NIPGEL® AY-200 of TOSO-Silica, not fumed silica, is used for comparison.

Table-1

| Silica | Aerosil 130 | Aerosil 200 | Aerosil 300 | CAB-O-SIL M5 | CAB-O-SIL LM150 | Nipgel AY-200 |
|---|---|---|---|---|---|---|
| Specific surface area (BET) | 130 | 200 | 300 | 200 | 150 | 300 |
| Primary particle size (nanometer) | 16 | 12 | 7 | 12 | 20 | 10 |
| pH value | 4,1 | 4,0 | 3,8 | 4,1 | 3,7 | 7,0 |

PVB resin:          Mowital B 68/2 SF with 20.5 weight% PVOH from Kuraray Europe GmbH
Plasticizer:          DBEA (Di-(2-butoxyethyl)-adipate) 3G8 (Triethylenglycol-di-2-ethylhexanoate)
Basic compound:    Potassium acetate and magnesium acetate

## 4) Results

As can be seen from the following Table 2 through 4, interlayer films according to the invention show an improved tensile stress and acceptable values for haze and yellowness.

Table-2 [Monolayer: Single plasticizer]
Table-3 [Monolayer: Two plasticizers]
Table-4 [Monolayer: Two plasticizers]
Table-5 [Three-layer: Two plasticizers]

Table 2

| | Example | C1 | W1 | W2 | W3 | C2 | C3 | C4 |
|---|---|---|---|---|---|---|---|---|
| Composition[5] | (A) Polyvinyl acetal[1] (weight-%) | PVB (72) | PVB (72) | PVB (72) | PVB (72) | PVB (72) | PVB (72) | PVB (72) |
| | (B) Plasticizer[2] (weight-%) | 3G8 (28) | 3G8 (28) | 3G8 (28) | 3G8 (28) | 3G8 (28) | 3G8 (28) | 3G8 (28) |
| | (C) Silica[3] (weight-%) | – | A-130 (3.6) | A-130 (14) | A-130 (40) | A-130 (3.6) | A-130 (0.7) | AY-200 (3.6) |
| | (D) Basic compound[4] (weight-%) | K (0.025) Mg (0.05) | K (0.025) Mg (0.05) | K (0.025) Mg (0.05) | K (0.025) Mg (0.05) | – | K (0.025) Mg (0.05) | K (0.025) Mg (0.05) |
| Properties of film | Haze [%] | 0,9 | 2,7 | 2,7 | 3,2 | 8,5 | 1,6 | 11,2 |
| | Yellowness delta b | 0,2 | 0,3 | 0,2 | 0,2 | 5,1 | 0,2 | 0,2 |
| | Tg [deg-C] | 38 | 38 | 38 | 38 | 38 | 38 | 38 |
| | Tensile stress at 50% of elongation [Mpa] (ratio to C1) | 3.8 (1.0) | 5.0 (1.3) | 9.6 (2.5) | 28 (7.4) | – | 4.1 (1.1) | 6.0 (1.6) |
| | Tensile stress at 100% of elongation [Mpa] (ratio to C1) | 10.5 (1.0) | 14.6 (1.4) | 23.6 (2.2) | – | – | 10.9 (1.0) | 16.0 (1.5) |
| | Elongation at break [%] | 202 | 169 | 130 | 58 | – | 195 | 171 |
| | Alkaline Titer | 50 | 43 | 33 | 4 | 0 | 49 | 48 |

1) PVB: Mowital B 68/2 SF (Kuraray Europe GmbH), 2) 3G8: Triethylenglycol-di-2-ethylhexanoate, 3) A-130:Aerosil 130, AY-200:NIPGEL AY-200, 4) K: Potassium acetate, Mg: Magnesium acetate tetrahydrate, 5) Weight-% is based on plasticized acetal (A+B)

EP 1 977 887 A1

Table 3

| | Example | C5 | W4 | W5 | W6 | W7 | C6 |
|---|---|---|---|---|---|---|---|
| Composition[6] | (A) Polyvinyl acetal[1] (weight-%) | PVB (65) | PVB (65) | PVB (65) | PVB (65) | PVB (65) | PVB (65) |
| | (B) Plasticizer[2] (weight-%) | 3G8:DBEA[1:1] (35) | 3G8:DBEA[1:1] (35) | 3G8:DBEA[1:1] (35) | 3G8:DBEA[1:1] (35) | 3G8:DBEA[1:1] (35) | 3G8:DBEA[1:1] (35) |
| | (C) Silica[3] (weight-%) | – | A-130 (6.4) | A-300 (6.4) | M5 (6.4) | LM150 (6.4) | A-130 (6.4) |
| | (D) Basic compound[4] (weight-%) | K (0.025) Mg (0.05) | K (0.025) Mg (0.05) | K (0.025) Mg (0.05) | K (0.025) Mg (0.05) | K (0.025) Mg (0.05) | – |
| | UV-absorber[5] (weight-%) | Tinuvin 328 (0.15) | Tinuvin 328 (0.15) | Tinuvin 328 (0.15) | Tinuvin 328 (0.15) | Tinuvin 328 (0.15) | Tinuvin 328 (0.15) |
| Properties of film | Haze [%] | 0,4 | 1,6 | 1,8 | 1,3 | 1,2 | 9,3 |
| | Yellowness delta b | 0,2 | 0,3 | 0,2 | 0,5 | 0,4 | 5,2 |
| | Tg [deg-C] | 28 | 29 | 29 | 29 | 29 | – |
| | Tensile stress at 50% of elongation [Mpa] (ratio to C5) | 0.6 (1.0) | 0.8 (1.3) | 0.7 (1.2) | 0.8 (1.3) | 0.8 (1.3) | – |
| | Tensile stress at 100% of elongation [Mpa] (ratio to C5) | 1.1 (1.0) | 1.9 (1.7) | 1.8 (1.6) | 2.1 (1.9) | 1.9 (1.7) | – |
| | Elongation at break [%] | 346 | 332 | 368 | 311 | 317 | – |
| | Alkaline titer | 41 | 37 | 35 | 35 | 36 | 0 |

1) PVB: Mowital B 68/2 SF (Kuraray Europe GmbH), 2) 3G8: Triethylenglycol-di-2-ethylhexanoate, DEBA: Di-(2-buthoxyethyl)-adipate, 3) A-130:Aerosil 130, A-300:Aerosil 300, M5:Cab-O-Sil M5, LM150:Cab-O-Sil LM150
4) K: Potassium acetate, Mg: Magnesium acetate tetrahydrate, 5) Benzotriazole Tinuvin 328 (Ciba)
6) Weight-% is based on plasticized acetal (A+B)

Table 4

| | Example | C7 | W8 | W9 | C8 |
|---|---|---|---|---|---|
| Composition[5] | (A) Polyvinyl acetal[1] (weight-%) | PVB (66) | PVB (66) | PVB (66) | PVB (66) |
| | (B) Plasticizer[2] (weight-%) | 3G8:DBEA[1:1] (34) | 3G8:DBEA[1:1] (34) | 3G8:DBEA[1:1] (34) | 3G8:DBEA[1:1] (34) |
| | (C) Silica[3] (weight-%) | – | A-130 (6.6) | A-200 (6.6) | AY-200 (6.6) |
| | (D) Basic compound[4] (weight-%) | K (0.025) Mg (0.05) | K (0.025) Mg (0.05) | K (0.025) Mg (0.05) | K (0.025) Mg (0.05) |
| Properties of film | Haze [%] | 1,2 | 2,6 | 4,4 | 19,7 |
| | Yellowness delta b | 0,2 | 0,2 | 0,2 | 0,2 |
| | Tg [deg-C] | 32 | 32 | 32 | 32 |
| | Tensile stress at 50% of elongation [Mpa] (ratio to C7) | 1.6 (1.0) | 2.4 (1.5) | 2.4 (1.5) | 2.9 (1.8) |
| | Tensile stress at 100% of elongation [Mpa] (ratio to C7) | 4.1 (1.0) | 6.8 (1.7) | 7.9 (1.9) | 8.7 (2.1) |
| | Elongation at break [%] | 263 | 216 | 231 | 204 |
| | Alkaline titer | 42 | 34 | 36 | 43 |

1) PVB: Mowital B 68/2 SF (Kuraray Europe GmbH), 2) 3G8: Triethylenglycol-di-2-ethylhexanoate, DEBA: Di-(2-buthoxyethyl)-adipate, 3) A-130:Aerosil 130, A-200:Aerosil 200, AY-200:NIPGEL AY-200, 4) K: Potassium acetate, Mg: Magnesium acetate tetrahydrate, 5) Weight-% is based on plasticized acetal (A+B)

EP 1 977 887 A1

Table 5

| | Example | C9 | W10 |
|---|---|---|---|
| Composition of core layer[6] | (A) Polyvinyl acetal[1] (weight-%) | PVB (65) | PVB (65) |
| | (B) Plasticizer[2] (weight-%) | 3G8:DBEA[1:1] (35) | 3G8:DBEA[1:1] (35) |
| | (C) Silica[3] (weight-%) | − | A- 130 (10.0) |
| | (D) Basic compound[4] (weight-%) | K (0.025) Mg (0.05) | K (0.025) Mg (0.05) |
| | UV-absorber[5] (weight-%) | Tinuvin 328 (0.15) | Tinuvin 328 (0.15) |
| Properties of layered film | Haze [%] | 0,5 | 0,9 |
| | Yellowness delta b | 0,2 | 0,2 |
| | Tg [deg-C] | − | − |
| | Tensile stress at 50% of elongation [MPa] (ratio to C10) | 0.6 (1.0) | 1.1 (1.8) |
| | Tensile stress at 100% of elongation [MPa] (ratio to C10) | 1.0 (1.0) | 2.3 (2.3) |
| | Elongation at break [%] | 342 | 322 |
| | Alkaline titer | 44 (core layer) | 28 (core layer) |

1) PVB: Mowital B 68/2 SF (Kuraray Europe GmbH), 2) 3G8: Triethylenglycol-di-2-ethylhexanoate, DEBA: Di-(2-buthoxyethyl)-adipate, 3) A-130:Aerosil 130(Degussa), 4) K: Potassium acetate, Mg: Magnesium acetate tetrahydrate, 5) Benzotriazole Tinuvin 328 (Ciba), 6) Weight-% is based on plasticized acetal (A+B)

**Claims**

1. Interlayer film useful for laminated glass comprising polyvinyl acetal (A), at least one plasticizer (B), fumed silica (C) and at least one basic compound (D), wherein the interlayer film has at a thickness of 0,76 mm a haze value of 0,01 to 5,0 % according to ASTM 1003 and the weight ratio of C/(A+B) is 2,5/100 to 60/100.

2. Interlayer film according to Claim 1, wherein the basic compound (D) is a metal salt of organic carbon acids comprising 1 to 15 carbon atoms.

3. Interlayer film according to Claim 1 or 2, wherein the average size of primary particles of the fumed silica (C) is not more than 50 nm and the average BET-surface area of the fumed silica (C) is not less than 50 $m^2$/g.

4. Interlayer film according to any of Claims 1 through 3, wherein the film has an alkaline titer of more than 3.

5. Interlayer film according to any of the Claims 1 through 4, wherein the tensile stress at 50% and/or 100% of elongation of said interlayer film is at least 1.2 times of that of an interlayer film with the same composition without fumed silica (C).

6. Interlayer film according to any of the Claims 1 through 5, wherein the difference between the glass transition temperature of said interlayer film, Tga, and the glass transition temperature of an interlayer film with the same composition without fumed silica (C), Tgb, is within 3 degrees Celsius. (|Tga-Tgb| <= 3)

7. Interlayer film according to any of the Claims 1 through 6, wherein;

   a) the tensile stress at 50% and/or 100% of elongation of the said interlayer film is at least 1.2 times of as that of an interlayer film with the same composition without fumed silica (C); and
   b) the difference between the glass transition temperature of said interlayer film, Tga, and the glass transition temperature of an interlayer film with the same composition without fumed silica (C), Tgb, is within 3 degrees Celsius. (|Tga-Tgb| <= 3).

8. Multilayer film useful for laminated glass consisting of at least one layer or film comprising polyvinyl acetal (A') and at least one plasticizer (B') and at least one layer or film comprising polyvinyl acetal (A), at least one plasticizer (B), fumed silica (C) and at least one basic compound (D), wherein the multilayer film has at a thickness of 0,76 mm a haze value of 0,01 to 5,0 % according to ASTM 1003 and the weight ratio of C/(A+B) is 2,5/100 to 60/100.

9. Multilayer film wherein at least one layer or film, comprising polyvinyl acetal (A), at least one plasticizer (B), fumed silica (C) and at least one basic compound (D), wherein the interlayer film has at a thickness of 0,76 mm a haze value of 0,01 to 5,0 according to ASTM 1003 and the weight ratio of C/(A+B) is 2,5/100 to 60/100 is sandwiched between at least two layers or films comprising polyvinyl acetal (A') and at least one plasticizer (B').

10. Use of the interlayer film according to any of the Claims 1 through 7 or the multilayer film according to the Claims 8 or 9 in laminated glazing, especially for windshields of cars, busses, aircrafts, buildings and in sound-absorbing walls.

**European Patent Office**

EUROPEAN SEARCH REPORT

Application Number

EP 07 10 5695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | EP 0 227 633 A2 (MONSANTO CO [US]) 1 July 1987 (1987-07-01) * page 3, line 22 - line 50 * * page 4, line 2 - line 24 * ----- | 1,4-10 | INV. B32B17/10 C03C27/12 C08K3/36 C08L29/14 |
| D,A | DE 197 56 274 A1 (HUELS TROISDORF [DE]) 24 June 1999 (1999-06-24) * page 2, line 14 - line 68 * * page 4, line 26 - line 44; table 3 * ----- | 1,2,5-10 | |
| D,A | JP 11 060290 A (SEKISUI CHEMICAL CO LTD) 2 March 1999 (1999-03-02) * paragraph [0098] - paragraph [0101]; table 2 * ----- | 1,2,10 | |
| D,A | US 2 467 342 A (SEYMOUR RAYMOND B) 12 April 1949 (1949-04-12) * column 2, line 43 - column 4, line 26; example 1; table * ----- | 1 | |
| A | US 3 202 568 A (CLEMENT COTTET EMILE ET AL) 24 August 1965 (1965-08-24) * column 1, line 45 - column 2, line 7; claims * ----- | 1 | TECHNICAL FIELDS SEARCHED (IPC) B32B C08K C09C |
| A | US 2 317 891 A (DENNISON BROOK J) 27 April 1943 (1943-04-27) * column 3, line 53 - column 4, line 4; claims * ----- | 1 | |
| A | US 4 164 602 A (FABEL DAVID A [US]) 14 August 1979 (1979-08-14) * column 3, line 1 - column 5, line 35; claims * ----- | 1 | |
| A | EP 0 928 818 A2 (DOW CORNING [US]) 14 July 1999 (1999-07-14) * paragraphs [0007] - [0009], [1421]; claims; examples * ----- | 1,3 | |

The present search report has been drawn up for all claims

| Place of search | Date of completion of the search | Examiner |
|---|---|---|
| Munich | 7 September 2007 | Lindner, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 5695

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2007

| Patent document cited in search report | | Publication date | Patent family member(s) | | Publication date |
|---|---|---|---|---|---|
| EP 0227633 | A2 | 01-07-1987 | AU | 588657 B2 | 21-09-1989 |
| | | | AU | 6684786 A | 25-06-1987 |
| | | | CA | 1285673 C | 02-07-1991 |
| | | | CS | 8609769 A2 | 12-07-1990 |
| | | | DE | 3684266 D1 | 16-04-1992 |
| | | | ES | 2031076 T3 | 01-12-1992 |
| | | | GR | 3004044 T3 | 31-03-1993 |
| | | | IN | 168645 A1 | 11-05-1991 |
| | | | JP | 62158037 A | 14-07-1987 |
| | | | MX | 163463 B | 18-05-1992 |
| | | | US | 4681810 A | 21-07-1987 |
| | | | ZA | 8609633 A | 30-09-1987 |
| DE 19756274 | A1 | 24-06-1999 | BR | 9813742 A | 10-10-2000 |
| | | | CN | 1284911 A | 21-02-2001 |
| | | | WO | 9932283 A1 | 01-07-1999 |
| | | | EP | 1042121 A1 | 11-10-2000 |
| | | | ES | 2210859 T3 | 01-07-2004 |
| | | | JP | 2001526165 T | 18-12-2001 |
| JP 11060290 | A | 02-03-1999 | NONE | | |
| US 2467342 | A | 12-04-1949 | NONE | | |
| US 3202568 | A | 24-08-1965 | CH | 391200 A | 30-04-1965 |
| | | | DE | 1174458 B | 23-07-1964 |
| | | | FR | 1260751 A | 12-05-1961 |
| | | | GB | 920233 A | 06-03-1963 |
| | | | NL | 262593 A | |
| US 2317891 | A | 27-04-1943 | NONE | | |
| US 4164602 | A | 14-08-1979 | CA | 1102946 A1 | 09-06-1981 |
| | | | DE | 2861458 D1 | 11-02-1982 |
| | | | EP | 0001502 A1 | 18-04-1979 |
| | | | IT | 1099773 B | 28-09-1985 |
| | | | JP | 54066936 A | 29-05-1979 |
| | | | MX | 148185 A | 24-03-1983 |
| EP 0928818 | A2 | 14-07-1999 | DE | 69922557 D1 | 20-01-2005 |
| | | | DE | 69922557 T2 | 15-12-2005 |
| | | | JP | 11246210 A | 14-09-1999 |
| | | | US | 5919298 A | 06-07-1999 |

EPO FORM P0459

For more details about this annex : see Official Journal of the European Patent Office, No. 12/82

EP 1 977 887 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2467342 A
- EP 0227633 A
- EP 1042121 A
- JP 11060290 A
- DE 10143109

- WO 0240578 A1
- DE 102004043907 A1
- EP 0185863 B1
- WO 03097347 A1
- WO 0143963 A1